# FASCICULE DE BREVET EUROPEEN

(11) **EP 0 838 885 B1**
(45) Date de publication et mention de la délivrance du brevet: **12.09.2001**
(21) Numéro de dépôt: 97402479.6
(22) Date de dépôt: 20.10.1997
(51) Int. Cl.: H02G 3/04

(54) **Agrafe de retenue pour goulotte, et goulotte équipée d'une telle agrafe de retenue**
Halteklammer für Kabelrinnen und zugehörige Kabelrinne
Holding clip for a raceway and associated raceway

(30) Priorité: 25.10.1996 FR 9613070
(43) Date de publication de la demande: 29.04.1998
(73) Titulaire: LEGRAND, F-87000 Limoges (FR); LEGRAND SNC, F-87000 Limoges (FR)
(72) Inventeur: Decore, Bertrand, 72650 La Chapelle Saint Aubin (FR)
(74) Mandataire: CABINET BONNET-THIRION

(56) Documents cités:
- EP-A- 0 392 956
- DE-A- 2 326 348
- DE-A- 3 534 669
- FR-A- 1 404 973
- FR-A- 2 684 813

## Description

La présente invention concerne d'une manière générale les goulottes, c'est-à-dire les profilés dont la section transversale est ouverte.

Elle vise plus particulièrement, mais non nécessairement exclusivement, celles de ces goulottes qui sont destinées au logement et à la protection d'un quelconque matériel électrique.

Elles servent, notamment, et, parfois, exclusivement, au logement, et à la protection, de conducteurs électriques.

En général, ces goulottes sont en matière synthétique, et elles sont réalisées par exemple par extrusion ou par "pultrusion" de matière composite ; elles peuvent également être réalisées par profilage de tôle métallique.

Le plus souvent, elles présentent, extérieurement, en section transversale, un profil globalement en U ou en C, avec une semelle médiane, qui forme leur fond, deux ailes latérales, qui forment leur paroi de côté, et, éventuellement, une ou plusieurs cloisons internes, fixes ou amovibles, qui sont parallèles à leurs ailes latérales.

Elles sont en outre conformées de manière à pouvoir recevoir, par emboîtement, et, le plus souvent, par encliquetage, un couvercle propre à leur fermeture.

Ce couvercle coiffe, par exemple, de l'extérieur, les ailes latérales, sur une portion plus ou moins grande de la hauteur de celles-ci à compter de leur bord libre.

La présente invention vise cependant plus particulièrement, les goulottes qui, pour une intervention plus limitée d'un tel couvercle, présentent, en saillie sur la surface interne de chacune de leurs ailes latérales, un retour en équerre dirigé vers l'intérieur et comportant, longitudinalement, pour l'emboîtement de ce couvercle, une rainure.

Il est connu, par ailleurs, de longue date, de rapporter, transversalement, de place en place, sur une goulotte, des agrafes de retenue, pour assurer, de manière temporaire, avant la mise en place du couvercle, ou lors d'une dépose de celui-ci, le maintien des conducteurs électriques qui sont mis en place dans cette goulotte ou qui y sont déjà disposés.

Cela est le cas, par exemple, dans le brevet français No 1 404 973, dans la demande de brevet allemand No 34 41 377, et dans la demande de brevet européen No 0 239 945.

Les agrafes de retenue correspondantes comportent, globalement, une platine allongée, dont une extrémité, dite ci-après par simple commodité extrémité de fixation, au moins, présente des moyens d'assujettissement propres à en permettre la fixation à l'une des ailes latérales de la goulotte à équiper.

Dans le brevet français No 1 404 973, l'agrafe de retenue présente, de manière symétrique, de tels moyens d'assujettissement à l'une et l'autre des extrémités de sa platine, et il s'agit, globalement, d'un bourrelet par lequel cette agrafe de retenue est apte à s'encliqueter dans une rainure courant longitudinalement en continu le long du bord libre des ailes latérales de la goulotte et/ou le long du bord libre de cloisons internes susceptibles d'équiper cette dernière.

Dans la demande de brevet allemand No 34 41 377, l'agrafe de retenue présente, également, de manière symétrique, des moyens d'assujettissement à l'une et l'autre des extrémités de sa platine, et il s'agit, globalement, des deux mâchoires d'une pince par laquelle cette agrafe de retenue est apte à enserrer un retour en équerre, qui, prévu spécifiquement à cet effet, court longitudinalement en continu tout au long des ailes latérales de la goulotte, en saillie sur la surface interne de celles-ci.

La demande de brevet allemand No 35 34 669 décrit une agrafe de retenue similaire à celle décrite dans la demande de brevet allemand No 34 41 377, dans la mesure où elle présente, au moins à une extrémité, des moyens d'assujettissement consistant globalement en une pince comme précitée.

Dans la demande de brevet européen No 0 239 945, l'agrafe de retenue ne comporte des moyens d'assujettissement qu'à l'une des extrémités de sa platine, et, la goulotte présentant, comme précédemment, des retours en équerre prévus spécifiquement à cet effet en saillie sur la surface interne de ses ailes latérales, il s'agit, également comme précédemment, des deux mâchoires d'une pince par laquelle elle est apte à enserrer le retour en équerre de l'aile latérale correspondante de cette goulotte, cependant que, à l'autre extrémité de sa platine, elle présente, sur sa surface supérieure, une portée d'appui par laquelle elle est simplement destinée à s'engager sous le retour en équerre de l'autre des ailes latérales de la goulotte.

Dans la demande de brevet français FR 2 684 813, l'agrafe ou la barrette est fixée à la goulotte par des mâchoires qui s'accrochent à l'une des lamelles de cette goulotte et un levier de blocage comporte un agencement complexe de crochets latéraux pour permettre son blocage dans une position abaissée dans laquelle il serre les mâchoires sur la lamelle de la goulotte.

Eu égard aux dispositions adoptées pour leur mise en place, ces diverses agrafes de retenue ont pour avantage de pouvoir être indifféremment implantées en n'importe quel point de la goulotte, et de pouvoir être coulissées le long de celle-ci si désiré.

Mais, outre que, pour certaines au moins d'entre elles, elles nécessitent, au détriment des coûts, la présence de retours en équerre spécifiques sur la goulotte, et que, pour toutes, le couvercle de cette goulotte doit nécessairement coiffer de l'extérieur les ailes latérales de celle-ci, ces agrafes de retenue ont toutes pour inconvénient de barrer transversalement la goulotte sur toute la largeur de celle-ci lorsqu'elles sont en place sur cette goulotte, et, donc, de constituer par elles-mêmes une gêne pour l'accès au volume intérieur de cette goulotte, tant lorsqu'il s'agit, lors de l'installation initiale de l'ensemble, de mettre en place dans la goulotte un ou plusieurs conducteurs électriques, sauf à ne mettre en place les agrafes de retenue qu'après ces conducteurs électriques, au risque de voir alors ceux-ci échapper à la goulotte lorsque cette dernière est rapportée sur un mur ou sur un plafond, que lorsqu'il s'agit, lors d'une opération ultérieure de maintenance, de mettre en place un conducteur électrique dans la goulotte ou d'en retirer un de celle-ci.

Tout au plus peut-on, dans le cas d'une telle maintenance, dégager de la goulotte les agrafes de retenue à l'une de leurs extrémités pour ne les laisser en prise avec la goulotte que par l'autre de celles-ci.

Mais l'entrebâillement ainsi autorisé à l'extrémité dégagée de la goulotte reste de toute façon très limité.

En effet, tout en présentant, pour certaines d'entre elles, une certaine capacité de déformation élastique, la platine de ces agrafes de retenue s'étend sans discontinuité de l'une à l'autre de leurs extrémités, et elle n'est donc pas susceptible d'être défléchie vers l'extérieur de manière accentuée sans risquer d'échapper intempestivement à la goulotte par celle de ses extrémités par laquelle elle est en prise avec celle-ci.

La présente invention a d'une manière générale pour objet une disposition permettant d'éviter cet inconvénient.

De manière plus précise, elle a tout d'abord pour objet une agrafe de retenue définie par les caractéristiques de la revendication 1.

Formant, en quelque sorte, une zone de discontinuité dans l'ensemble que constituent conjointement la platine et le volet suivant l'invention, cette zone charnière confère à ce volet une capacité de pivotement d'une amplitude largement supérieure à celle autorisée par une simple déformation élastique.

Suivant l'invention, cette zone charnière est préférentiellement capable d'un pivotement, proche de 180°.

Quoi qu'il en soit, elle permet de rabattre très largement vers l'extérieur, si désiré, la platine de l'agrafe de retenue suivant l'invention, lorsque, par son volet, cette agrafe de retenue est en prise avec le retour en équerre de l'une des ailes latérales de la goulotte.

Le volume intérieur de la goulotte est alors très largement accessible, ce qui facilite avantageusement la mise en place, dans la goulotte, ou le retrait de celle-ci, d'un ou plusieurs conducteurs électriques.

Mais, si désiré, un simple entrebâillement de l'agrafe de retenue suivant l'invention par rapport à la goulotte reste également possible.

Il en est d'autant plus ainsi que, suivant une forme particulière, et préférée, de réalisation, le volet prévu suivant l'invention forme l'une des mâchoires, en l'espèce une mâchoire mobile, d'une pince dont l'autre mâchoire, solidaire de la platine, est, elle, fixe, ce qui affermit le maintien de cette agrafe de retenue sur la goulotte lorsqu'elle est simplement en prise avec celle-ci par celle des extrémités de sa platine où interviennent les moyens d'assujettissement équipant ce volet.

Préférentiellement, également, l'agrafe de retenue suivant l'invention présente, sur sa surface supérieure, à l'autre extrémité de sa platine, dite ci-après par simple commodité extrémité de butée, une simple portée d'appui par laquelle elle est apte à s'engager sous le retour en équerre de l'aile latérale correspondante de la goulotte.

Suivant un développement de cette disposition, la platine de l'agrafe de retenue suivant l'invention comporte, du côté de cette extrémité de butée, au moins un tronçon sécable présentant une telle portée d'appui.

Préférentiellement, plusieurs tronçons sécables sont ainsi prévus, les uns à la suite des autres.

L'agrafe de retenue suivant l'invention est ainsi avantageusement susceptible d'être très facilement adaptée en longueur à la distance suivant laquelle elle doit s'étendre sur la goulotte sur laquelle elle doit être rapportée, et, par exemple, à la largeur de cette goulotte mesurée de l'un à l'autre des retours en équerre des ailes latérales de celle-ci.

Dans tous les cas, l'agrafe de retenue suivant l'invention est avantageusement à même d'être rapportée sur une telle goulotte en n'importe quel point le long de celle-ci.

Elle convient enfin tout particulièrement, mais non nécessairement exclusivement, aux goulottes présentant des ailes latérales dont les retours en équerre comportent chacun longitudinalement une rainure pour l'emboîtement d'un couvercle.

Dans un tel cas, l'agrafe de retenue suivant l'invention est adaptée à pouvoir venir en prise, par son volet, avec la rainure du retour en équerre de l'une des ailes latérales d'une telle goulotte, tout en laissant libre transversalement dans cette rainure tout l'espace nécessaire à l'emboîtement du couvercle.

Il n'est donc avantageusement pas besoin de prévoir pour son implantation de quelconques retours en équerre spécifiques sur la goulotte.

La présente invention a donc encore pour objet une telle goulotte équipée d'au moins une telle agrafe de retenue.

Les objets de l'invention, leurs caractéristiques et leurs avantages, ressortiront d'ailleurs de la description qui va suivre, à titre d'exemple, en référence aux dessins schématiques annexés sur lesquels :
la figure 1 est une vue partielle en perspective éclatée d'une goulotte équipée d'une agrafe de retenue suivant l'invention ;
la figure 2 est une vue en perspective de cette seule agrafe de retenue, représentée isolément, pour une position relevée du volet qu'elle comporte ;
la figure 3 en est, à échelle supérieure, et suivant la ligne III-III de la figure 2, une vue en coupe longitudinale ;
les figures 4 et 5 sont des vues en coupe longitudinale, analogues à celle de la figure 3, pour la position rabattue du volet ;
la figure 6 est une vue en coupe transversale de l'agrafe de retenue suivant l'invention, suivant la ligne VI-VI de la figure 3 ;
les figures 7, 8, 9 et 10 sont des vues de bout de la goulotte à équiper lorsque celle-ci est implantée sur un mur, avec, en coupe longitudinale, une agrafe de retenue suivant l'invention dans l'une ou l'autre de plusieurs configurations illustrant les possibilités de mise en oeuvre de cette agrafe de retenue.

Tel qu'illustré sur ces figures, et de manière connue en soi, la goulotte 10 à équiper comporte, extérieurement, en section transversale, et suivant un profil général en U, une semelle médiane 11, qui en forme le fond 12, et deux ailes latérales 13, qui en forment les parois de côté 14.

Dans la forme de réalisation représentée, les ailes latérales 13 s'étendent sensiblement perpendiculairement à la semelle médiane 11, aux extrémités de celle-ci.

De manière également connue en soi, la goulotte 10 présente, en saillie sur la surface interne de chacune de ses ailes latérales 13, le long du bord libre de celles-ci, un retour en équerre 15, qui est dirigé vers l'intérieur, et qui, pour l'emboîtement d'un couvercle 16, comporte longitudinalement une rainure 18 à concavité tournée vers l'extérieur.

Dans la forme de réalisation représentée, les retours en équerre 15 que comporte ainsi la goulotte 10 s'étendent sensiblement parallèlement à la semelle médiane 11 de celle-ci, et, transversalement, ils ont l'un et l'autre sensiblement la même largeur.

En outre, la rainure 18 qu'ils comportent résulte d'une configuration en gouttière de leur bord libre.

Mais il n'en est pas nécessairement toujours ainsi.

Préférentiellement, et cela est le cas dans la forme de réalisation représentée, la section transversale de la rainure 18 de ces retours en équerre 15 se referme légèrement sur elle-même, suivant un angle au centre supérieur à 180°, pour l'encliquetage du couvercle 16, et, corollairement, ce couvercle 16 présente, en saillie sur sa surface inférieure, au voisinage de chacun de ses bords longitudinaux, un bourrelet 19, par lequel il est apte à être engagé élastiquement à force dans une telle rainure 18.

Enfin, dans la forme de réalisation représentée, la goulotte 10 présente, longitudinalement, en saillie sur son fond 12, deux nervures 20, à profil transversal en T, pour la fixation, à ce fond 12, d'un quelconque accessoire, et, par exemple, de cloisons internes amovibles.

En pratique, la goulotte 10 et le couvercle 16 sont des profilés en matière synthétique, réalisés par extrusion.

Les dispositions qui précèdent sont bien connues par elles-mêmes, et, ne faisant pas en propre l'objet de la présente invention, elles ne seront pas décrites plus en détail ici.

De manière également connue en soi, il est associé, localement, à la goulotte 10, au moins une agrafe de retenue 22 propre à s'étendre transversalement du retour en équerre 15 d'une de ses ailes latérales 13 au retour en équerre 15 de l'autre de celles-ci, parallèlement à la semelle médiane 11.

Globalement, cette agrafe de retenue 22 comporte une platine 23, qui est allongée, et dont une extrémité 24, au moins, dite ici extrémité de fixation, présente, suivant des dispositions décrites plus en détail ultérieurement, des moyens d'assujettissement 25 propres à sa fixation au retour en équerre 15 de l'une quelconque des ailes latérales 13 de la goulotte 10.

Suivant l'invention, ces moyens d'assujettissement 25 sont portés par un volet 26 articulé à la platine 23 par une zone charnière 28.

Dans la forme de réalisation représentée, la platine 23 a, en plan, un contour rectangulaire, et la zone charnière 28 du volet 26 s'étend sensiblement parallèlement à ses bords transversaux, c'est-à-dire sensiblement parallèlement à ses petits côtés.

Cette platine 23 est, par exemple, relativement rigide.

Dans la forme de réalisation représentée, elle présente, d'ailleurs, en saillie sur sa surface inférieure, le long de chacun de ses bords longitudinaux, c'est-à-dire le long de chacun de ses grands côtés, une nervure de renfort 29 qui en assure un certain raidissement.

Préférentiellement, et cela est le cas dans la forme de réalisation représentée, le volet 26 portant les moyens d'assujettissement 25 est d'un seul tenant avec la platine 23, la zone charnière 28 qui le relie à celle-ci étant une zone de moindre épaisseur pour l'ensemble.

Dans la forme de réalisation représentée, ce volet 26 s'étend du côté de la surface supérieure de la platine 23.

Par exemple, et tel que représenté, il est articulé à une nervure 30 qui fait saillie transversalement sur cette platine 23, à la surface supérieure de celle-ci, et la zone charnière 28 se réduit à un simple voile qui relie ce volet 26 à cette nervure 30 au niveau des surfaces supérieures respectives de ceux-ci.

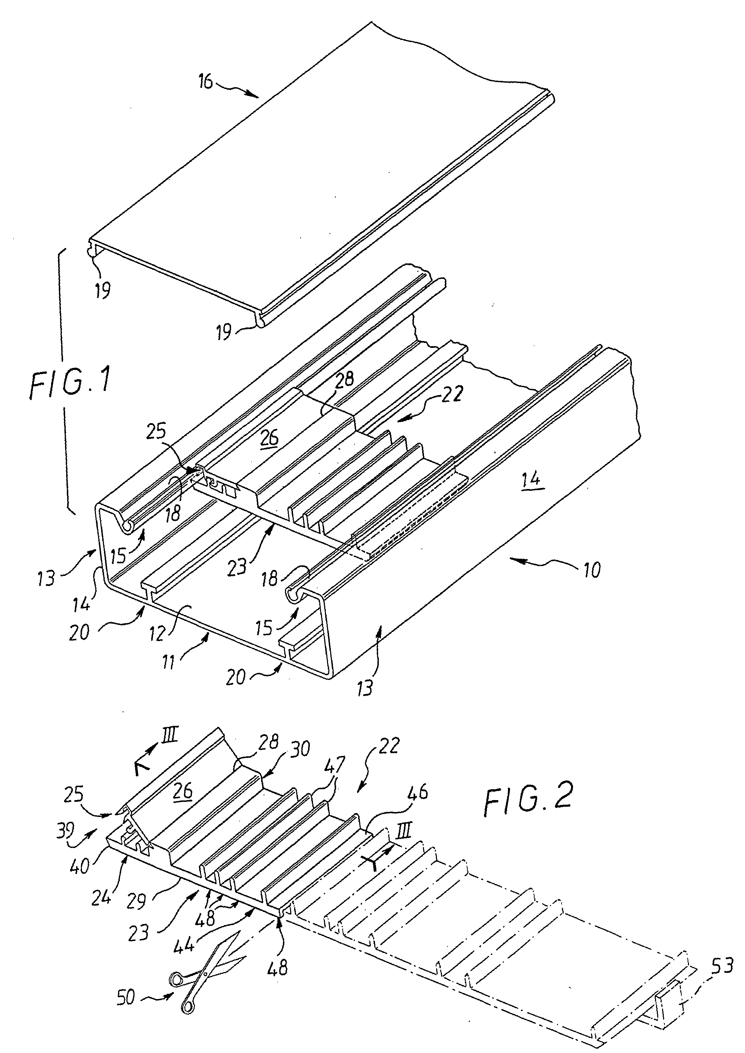

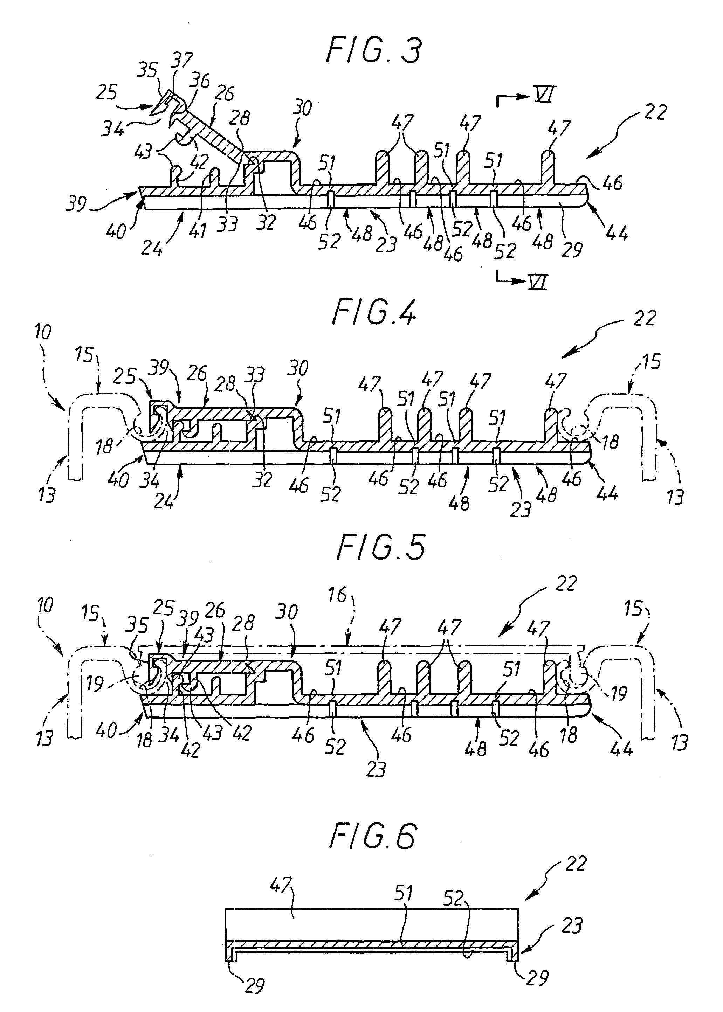

Plus précisément, dans la forme de réalisation représentée, la nervure 30 forme, en retrait par rapport à la zone charnière 28, un épaulement 32, et, en correspondance, le volet 26 présente un talon 33 par lequel il est apte à porter sur cet épaulement 32, lorsque, comme représenté sur les figures 1, 4 et 5, il est en position rabattue.

Quoi qu'il en soit, la zone charnière 28 est préférentiellement capable d'un pivotement au moins égal à 90°.

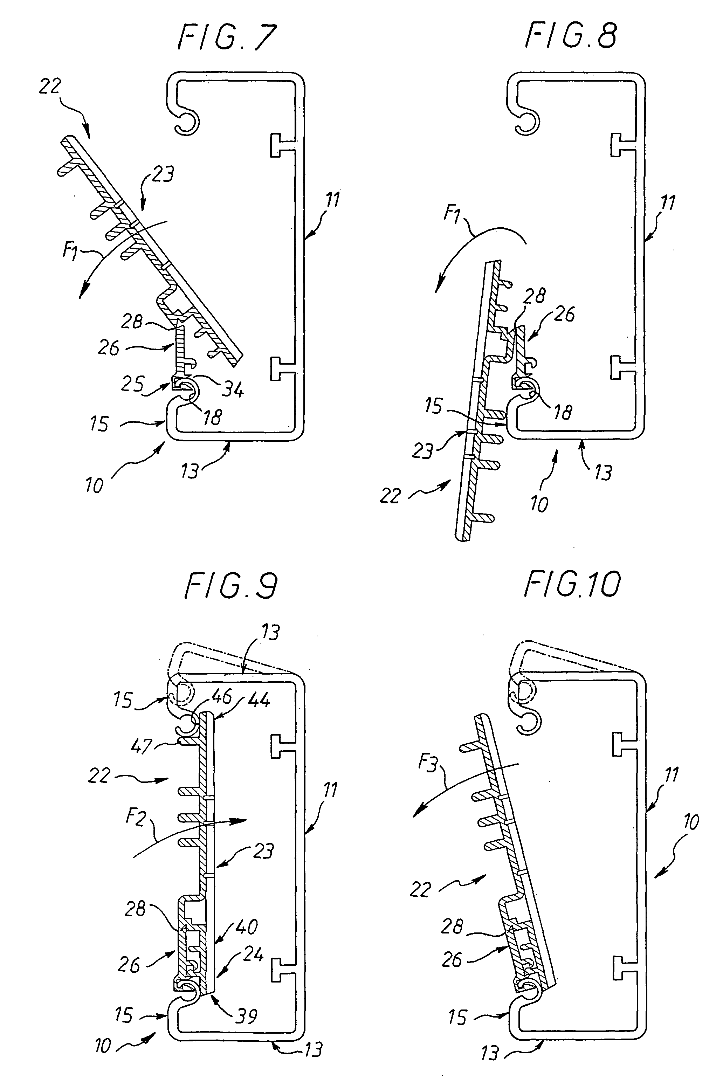

Dans la forme de réalisation représentée, et ainsi qu'il ressort de la figure 8, elle est capable d'un pivotement proche de 180°.

Pour l'allégement de l'agrafe de retenue 22, aussi bien que pour des raisons de moulage, la nervure 30 est évidée.

Dans la forme de réalisation représentée, les moyens d'assujettissement 25 dont est équipé le volet 26 articulé à la platine 23 comportent une rainure d'emboîtement 34 parallèle à sa zone charnière 28.

Par exemple, et tel que représenté, ces moyens d'assujettissement 25 se réduisent à cette nervure d'emboîtement 34, et la concavité de celle-ci est tournée vers la surface supérieure de la platine 23 lorsque le volet 26 est en position rabattue.

Dans la forme de réalisation représentée, cette rainure d'emboîtement 34 s'étend le long du bord libre du volet 26.

Elle est formée entre deux parois 35, 36, qui, orthogonales au volet 26, sont parallèles l'une à l'autre.

Préférentiellement, celle, 35, de ces parois 35, 36, qui est la plus éloignée de la zone charnière 28, a une épaisseur réduite.

Dans la forme de réalisation représentée, l'épaisseur de cette paroi 35 est inférieure à celle de l'autre paroi 36.

Pour faciliter l'engagement de la rainure d'emboîtement 34 sur la partie de la rainure 18 du retour en équerre 15 des ailes latérales 13 de la goulotte 10 la plus éloignée d'une telle aile latérale 13, les parois 35, 36 définissant cette rainure d'emboîtement 34 sont chanfreinées intérieurement au débouché de cette dernière.

En outre, pour permettre un encliquetage sur la partie en question de la rainure 18 des retours en équerre 15 de la goulotte 10, le flanc de la rainure d'emboîtement 34 du volet 26 le plus éloigné de la zone charnière 28 présente, au moins localement, en saillie, sur sa surface interne, un bourrelet de crochetage 37.

Dans la forme de réalisation représentée, le volet 26 articulé à la platine 23 forme l'une des mâchoires, en l'espèce une mâchoire mobile, d'une pince 39, dont l'autre mâchoire 40, solidaire de la platine 23, est, elle, une mâchoire fixe.

Par exemple, et tel que représenté, d'un seul tenant avec la platine 23, la mâchoire fixe 40 de la pince 39 est formée par un prolongement de cette platine 23.

Préférentiellement, et cela est le cas dans la forme de réalisation représentée, entre la mâchoire mobile formée par le volet 26 et la mâchoire fixe 40 sont prévus des moyens d'encliquetage propres à intervenir pour la position rabattue de ce volet 26.

Par exemple, et tel que représenté, ces moyens d'encliquetage comportent deux nervures 42, qui, solidaires chacune respectivement des deux mâchoires en question, en s'étendant sensiblement parallèlement à la zone charnière 28, présentent, chacune, en correspondance l'une avec l'autre, un bourrelet de crochetage 43.

La nervure 42 de la mâchoire mobile formée par le volet 26 s'étend en saillie sur la surface inférieure de ce volet 26, en retrait par rapport à la rainure d'emboîtement 34.

La nervure 42 de la mâchoire fixe 40 s'étend en saillie sur la surface supérieure de celle-ci, en retrait par rapport à son bord libre, et, pour la position rabattue du volet 26, elle s'étend entre la nervure 42 de la mâchoire mobile formée par celui-ci, et celle, 36, des parois 35, 36 définissant la rainure d'emboîtement 34 que comporte ce volet 26, en étant alors contrebutée par cette paroi 36.

Dans la forme de réalisation représentée, la mâchoire fixe 40 comporte, en saillie sur sa surface supérieure, une autre nervure 41, qui, parallèle à la nervure 42, et de hauteur sensiblement égale à celle de celle-ci, s'étend entre cette nervure 42 et la zone charnière 28, pour un appui éventuel du volet 26.

Dans la forme de réalisation représentée, l'agrafe de retenue 22 suivant l'invention ne comporte des moyens d'assujettissement 25 qu'à la seule extrémité de fixation 24 de sa platine 23.

A son autre extrémité 44, dite ici extrémité de butée, cette platine 23 présente, en effet, simplement, sur sa surface supérieure, une portée d'appui 46 par laquelle elle est apte à s'engager sous le retour en équerre 15 de l'aile latérale 13 correspondante de la goulotte 10.

Dans la forme de réalisation représentée, cette portée d'appui 46 est délimitée, du côté de la zone charnière 28, par une nervure 47, qui, en saillie sur la platine 23, sur la surface supérieure de celle-ci, s'étend sensiblement parallèlement à cette zone charnière 28.

Cette nervure 47 a, par exemple, une hauteur sensiblement égale à celle de la nervure 30.

Mais elle a une largeur très inférieure à celle de cette dernière.

En outre, elle est massive.

Préférentiellement, et cela est le cas dans la forme de réalisation représentée, la platine 23 de l'agrafe de retenue 22 suivant l'invention comporte, du côté de son extrémité de butée 44, au moins un tronçon sécable 48 présentant une portée d'appui 46 délimitée par une nervure 47.

Dans la forme de réalisation représentée, la platine 23 comporte successivement, à la suite les uns des autres, plusieurs tronçons sécables 48.

Tel que schématisé par une paire de ciseaux 50 sur la figure 2, elle peut ainsi être coupée à la demande, pour adapter sa longueur à la largeur de la goulotte 10, c'est-à-dire à la distance séparant l'un de l'autre les retours en équerre 15 des ailes latérales 13 de cette goulotte 10 au niveau de leur rainure 18.

Sur la figure 2, on a représenté, volontairement, en traits interrompus, une partie ainsi éliminée de la platine 23, du côté de son extrémité de butée 44, et, en traits continus, la partie subsistante de cette platine 23, du côté de son extrémité de fixation 24.

Les divers tronçons sécables 48 que comporte ainsi la platine 23 n'ont pas nécessairement la même largeur.

Au contraire, et tel que représenté, certains peuvent être plus larges que d'autres.

Préférentiellement, et cela est le cas dans la forme de réalisation représentée, chaque tronçon sécable 48 de la platine 23 s'étend à compter d'une zone de moindre épaisseur 51, qui est apte à en faciliter l'élimination, et qui, en amont de ce tronçon sécable 48, délimite une autre portée d'appui 46, cette portée d'appui 46 appartenant au tronçon sécable 48 adjacent, ou, pour celle qui côtoie la nervure 30, à la partie finalement subsistante de la platine 23.

Dans la forme de réalisation représentée, la zone de moindre épaisseur 51 à compter de laquelle s'étend un tronçon sécable 48 est formée par une rainure 52 affectant transversalement en creux la platine 23 sur sa surface inférieure, nervures de renfort 29 comprises.

Dans la forme de réalisation représentée, et tel que schématisé en traits interrompus sur la figure 2, la platine 23 présente, en saillie sur sa surface supérieure, le long de son bord transversal, pour le premier tronçon sécable 48, un crochet 53, qui, pour des raisons explicitées ultérieurement, borde, au moins localement, la portée d'appui 46 correspondante.

Mais, préférentiellement, et tel que représenté, pour chacun des tronçons sécables 48 autre que le premier, la portée d'appui 46 s'étend au contraire librement en continu jusqu'au bord transversal de la platine 23 résultant de l'élimination du tronçon sécable 48 précédent.

Autrement dit, abstraction faite du premier tronçon sécable 48, la platine 23 est dépourvue de toute saillie, telle que crochet ou autre, tant sur la portée d'appui 46 d'un tel tronçon sécable 48 qu'en bordure de cette portée d'appui 46.

Enfin, dans la forme de réalisation représentée, le volet 26 de l'agrafe de retenue 22 suivant l'invention s'étend sur toute la largeur de la platine 23 de celle-ci, et il en est de même pour toutes les nervures 30 et 47 également présentes en saillie sur la surface supérieure de cette platine 23.

Par contre, le crochet 53 ne s'étend que sur une fraction de cette largeur, dans la zone médiane du bord transversal correspondant de la platine 23.

On supposera ci-après que, tel que schématisé par les figures 7 à 10, la goulotte 10 est rapportée horizontalement sur un mur, non représenté, en étant appliquée à celui-ci par sa semelle médiane 11.

Tel que représenté sur la figure 7, l'agrafe de retenue 22 suivant l'invention peut alors être amenée en prise par son volet 26 avec le retour en équerre 15 de l'aile latérale 13 inférieure de cette goulotte 10.

Il suffit, pour cela, que, par la rainure d'emboîtement 34 constituant les moyens d'assujettissement 25 correspondants, ce volet 26 soit engagé, et encliqueté, sur la partie de la rainure 18 de ce retour 15 la plus éloignée de l'aile latérale 13 concernée.

Ainsi qu'on le notera, du fait, notamment, de l'encliquetage assuré à cette occasion, cet engagement suffit au maintien de l'ensemble de l'agrafe de retenue 22 sur la goulotte 10.

Dès lors, par pivotement autour de la zone charnière 28, la platine 23 de l'agrafe de retenue 22 suivant l'invention peut être rabattue vers le bas, suivant la flèche F1 des figures 7 et 8, ce qui dégage très largement l'accès au volume intérieur de la goulotte 10, comme représenté à la figure 8.

En position d'utilisation, et tel que représenté à la figure 9, l'extrémité de butée 44 de la platine 23 de l'agrafe de retenue 22 est au contraire engagée, tel que schématisé par la flèche F2, sous le retour en équerre 15 de l'aile latérale 13 supérieure de la goulotte 10, moyennant, tel que schématisé en traits interrompus, une déformation élastique temporaire de cette aile latérale 13.

Du côté de cette extrémité de butée 44, la platine 23 bute alors contre le retour en équerre 15 concerné, tant, transversalement, par sa portée d'appui 46, que, le cas échéant, longitudinalement, par la nervure 47, ou 30, délimitant cette portée d'appui 46.

Lorsque la platine 23 est utilisée à pleine longueur, et qu'elle comporte donc encore le crochet 53, ce crochet 53 intervient lui-même en butée, longitudinalement, du côté opposé à la nervure 47 associée, pour éviter, eu égard à la largeur relativement grande que présente alors la goulotte 10, un fléchissement trop important de l'agrafe de retenue 22 risquant de conduire sa portée d'appui 46 à échapper au retour en équerre 15 sous lequel elle est engagée.

Conjointement, du côté de l'extrémité de fixation 24 de la platine 23, la mâchoire mobile que constitue le volet 26 se trouve alors verrouillée de manière débrayable en position rabattue sur la mâchoire fixe 40 par les moyens d'encliquetage prévus à cet effet, ce qui affermit l'emprise de la pince 39 correspondante sur le retour en équerre 15 de l'aile latérale 13 inférieure de la goulotte 10.

Lorsqu'elle est ainsi en prise avec ce retour en équerre 15 par sa pince 39, l'agrafe de retenue 22 suivant l'invention peut, si désiré, être légèrement dégagée de la goulotte 10 à la partie supérieure de celle-ci, suivant la flèche F3 de la figure 10, et moyennant une déformation élastique temporaire de l'aile latérale 13 supérieure correspondante de cette goulotte 10.

L'entrebâillement ainsi assuré suffit normalement à une intervention de maintenance sur la goulotte 10, par exemple pour mise en place d'un ou plusieurs conducteurs électriques supplémentaires dans celle-ci ou pour le retrait de cette goulotte 10 d'un ou plusieurs des conducteurs électriques qui y sont déjà en place.

Ainsi qu'on le notera, et tel que schématisé en traits interrompus sur la figure 5, lorsque l'agrafe de retenue 22 suivant l'invention est en place sur la goulotte 10, elle laisse libre, transversalement, dans la rainure 18 du retour en équerre 15 de cette goulotte 10 concerné par son volet 26, tout l'espace libre nécessaire à l'emboîtement du couvercle 16, c'est-à-dire tout l'espace libre nécessaire à l'engagement, dans cette rainure 18, du bourrelet 19 correspondant de ce couvercle 16.

Cet engagement se trouve d'ailleurs favorisé par l'épaisseur réduite de la paroi 35 de la rainure d'emboîtement 34 formant les moyens d'assujettissement 25 portés par ce volet 26.

L'agrafe de retenue suivant l'invention peut tout aussi bien comporter un volet articulé à moyens d'assujettissement à l'une et l'autre des extrémités de sa platine.

En outre, au lieu d'appartenir à une aile latérale de la goulotte, l'un au moins des retours en équerre entre lesquels elle s'étend peut tout aussi bien appartenir à une quelconque cloison interne, fixe ou amovible, de la goulotte, intermédiaire entre ses ailes latérales lorsque cette goulotte comporte au moins une telle cloison interne.

Par suite, il faut entendre, ici, par "aile latérale" pour la goulotte, non seulement les ailes latérales proprement dites de celle-ci, mais encore toute cloison interne qu'elle pourrait comporter entre ces dernières.

## Revendications

1. Agrafe de retenue pour goulotte à ailes latérales munies chacune d'un retour en équerre dirigé vers l'intérieur, agrafe de retenue du genre comportant une platine (23) allongée, dont une extrémité (24), au moins, dite ici extrémité de fixation, présente des moyens d'assujettissement (25) propres à sa fixation au retour en équerre (15) de l'une des ailes latérales (13) de cette goulotte (10), et
**caractérisée en ce que** ces moyens d'assujettissement (25) sont portés par un volet (26) s'étendant du côté de la surface supérieure de la platine (23) et articulé à cette dernière par une zone charnière (28) capable d'un pivotement au moins égal à 90°, lesdits moyens d'assujettissement (25) comportant une rainure d'emboîtement (34) parallèle à la zone charnière (28).

2. Agrafe de retenue suivant la revendication 1, **caractérisée en ce que** la zone charnière (28) est capable d'un pivotement proche de 180°.

3. Agrafe de retenue suivant l'une quelconque des revendications 1, 2, **caractérisée en ce que** le volet (26) portant les moyens d'assujettissement (25) est d'un seul tenant avec la platine (23), la zone charnière (28) qui le relie à celle-ci étant une zone de moindre épaisseur pour l'ensemble.

4. Agrafe de retenue suivant l'une quelconque des revendications 1 à 3, **caractérisée en ce que** le volet (26) portant les moyens d'assujettissement (25) est articulé à une nervure (30) qui fait saillie transversalement sur la platine (23).

5. Agrafe de retenue suivant l'une quelconque des revendications 1 à 4, **caractérisée en ce que** le flanc de la rainure d'emboîtement (34) le plus éloigné de la zone charnière (28) présente, au moins localement, en saillie, un bourrelet de crochetage (37).

6. Agrafe de retenue suivant l'une quelconque des revendications 1 à 5, **caractérisée en ce que** la rainure d'emboîtement (34) du volet (26) s'étend le long du bord libre de celui-ci.

7. Agrafe de retenue suivant l'une quelconque des revendications 1 à 6, **caractérisé en ce que**, la rainure d'emboîtement (34) du volet (26) étant formée entre deux parois (35, 36), celle (35) de ces parois (35, 36) la plus éloignée de la zone charnière (28) a une épaisseur inférieure à celle de l'autre paroi (36).

8. Agrafe de retenue suivant l'une quelconque des revendications 1 à 7, **caractérisée en ce que** le volet (26) forme l'une des mâchoires, mobile, d'une pince (39), dont l'autre mâchoire (40), solidaire de la platine (23), est fixe.

9. Agrafe de retenue suivant la revendication 8, **caractérisée en ce que**, d'un seul tenant avec la platine (23), la mâchoire fixe (40) est formée par un prolongement de cette platine (23).

10. Agrafe de retenue suivant l'une quelconque des revendications 8, 9, **caractérisée en ce que**, entre la mâchoire mobile formée par le volet (26) et la mâchoire fixe (40), sont prévus des moyens d'encliquetage.

11. Agrafe de retenue suivant la revendication 10, **caractérisée en ce que** les moyens d'encliquetage prévus entre la mâchoire mobile formée par le volet (26) et la mâchoire fixe (40) comportent deux nervures (42), qui, solidaires chacune respectivement de ces deux mâchoires, présentent chacune, en correspondance l'une avec l'autre, un bourrelet de crochetage (43).

12. Agrafe de retenue suivant l'une quelconque des revendications 1 à 11, **caractérisée en ce que**, à son autre extrémité (44), dite extrémité de butée, la platine (23) présente, sur sa surface supérieure, une portée d'appui (46) par laquelle elle est apte à s'engager sous le retour en équerre 15 d'une des ailes latérales (13) de la goulotte (10).

13. Agrafe de retenue suivant la revendication 12, **caractérisée en ce que** la portée d'appui (46) est délimitée, du côté de la zone charnière (28), par une nervure (47), qui, en saillie sur la platine (23), s'étend sensiblement parallèlement à cette zone charnière (28).

14. Agrafe de retenue suivant l'une quelconque des revendications 12, 13, **caractérisée en ce que** la platine (23) comporte, du côté de son extrémité de butée (44), au moins un tronçon sécable (48) présentant une portée d'appui (46).

15. Agrafe de retenue suivant la revendication 14, **caractérisée en ce que** le tronçon sécable (48) que comporte la platine (23) s'étend à compter d'une zone de moindre épaisseur (51), qui est apte à en faciliter l'élimination, et qui, en amont de ce tronçon sécable (48), délimite une autre portée d'appui (46).

16. Agrafe de retenue suivant la revendication 15, **caractérisée en ce que** la zone de moindre épaisseur (51) à compter de laquelle s'étend un tronçon sécable (48) de la platine (23) est formée par une rainure (52) affectant transversalement en creux cette platine (23) sur sa surface inférieure.

17. Agrafe de retenue suivant l'une quelconque des revendications 14 à 16, **caractérisée en ce que** sa platine (23) comporte successivement plusieurs tronçons sécables (48).

18. Agrafe de retenue suivant la revendication 17, **caractérisée en ce que**, pour le premier tronçon sécable (48), la platine (23) présente, en saillie sur sa surface supérieure, le long de son bord transversal, un crochet (53).

19. Agrafe de retenue suivant l'une quelconque des revendications 17, 18, **caractérisée en ce que**, pour chacun des tronçons sécables (48) autre que le premier, la portée d'appui (46) s'étend librement en continu jusqu'au bord transversal de la platine (23) résultant de l'élimination du tronçon sécable (48) précédent.

20. Agrafe de retenue suivant l'une quelconque des revendications 1 à 19, **caractérisée en ce que** le volet (26) s'étend sur toute la largeur de la platine (23).

21. Agrafe de retenue suivant l'une quelconque des revendications 1 à 20, **caractérisée en ce que** toutes les nervures (30, 47) présentes en saillie sur la surface supérieure de la platine (23) s'étendent sur toute la largeur de celle-ci.

22. Agrafe de retenue suivant l'une quelconque des revendications 1 à 21, **caractérisée en ce que** la platine (23) présente, en saillie sur sa surface inférieure le long de chacun de ses bords longitudinaux, une nervure de renfort (29).

23. Goulotte qui, d'une part, est du genre comportant une semelle médiane (11) et deux ailes latérales (13), avec, en saillie sur la surface interne de chacune de ces ailes latérales (13), un retour en équerre (15), qui est dirigé vers l'intérieur et qui, pour l'emboîtement d'un couvercle (16), comporte longitudinalement une rainure (18), et à laquelle, d'autre part, il est associé, localement, au moins une agrafe de retenue (22), qui s'étend transversalement du retour en équerre (15) de l'une de ses ailes latérales (13) au retour en équerre (15) de l'autre de celles-ci, **caractérisée en ce que** l'agrafe de retenue (22) est conforme à l'une quelconque des revendications 1 à 22, cette agrafe de retenue (22) étant en prise avec la rainure (18) du retour en équerre (15) de l'une des ailes latérales (13) par son volet (26) tout en laissant libre transversalement dans cette rainure (18) tout l'espace nécessaire à l'emboîtement du couvercle (16).

## Patentansprüche

1. Halteklammer für Kabelrinne mit Seitenwangen, deren jede mit einer nach innen gerichteten rechtwinkligen Abwinklung versehen ist, wobei die Halteklammer eine langgestreckte Platte (23) besitzt, von der mindestens ein Ende (24), hier Befestigungsende genannt, Befestigungsmittel (25) aufweist, die für ihre Anbringung an der rechtwinkligen Abwinklung (15) einer der Seitenwangen (13) dieser Kabelrinne (10) geeignet sind, **dadurch gekennzeichnet, dass** diese Befestigungsmittel (25) von einem Flügel (26) getragen werden, der sich auf der Seite der oberen Fläche der Platte (23) erstreckt und an dieser über einen Scharnierbereich (28) angelenkt ist, der eine Verschwenkung von mindestens gleich 90° zulässt, wobei diese Befestigungsmittel (25) eine zum Scharnierbereich (28) parallele Einstecknut (34) umfassen.

2. Halteklammer nach Anspruch 1, **dadurch gekennzeichnet, dass** der Scharnierbereich (28) eine Verschwenkung von nahe 180° zulässt.

3. Halteklammer nach einem der Ansprüche 1, 2, **dadurch gekennzeichnet, dass** der die Befestigungsmittel (25) tragende Flügel (26) mit der Platte (23) einstückig ausgeführt ist, wobei der ihn mit der Platte verbindende Scharnierbereich (28) ein Bereich geringerer Dicke des Bauteils ist.

4. Halteklammer nach einem der Ansprüche 1 bis 3, **dadurch gekennzeichnet, dass** der die Befestigungsmittel (25) tragende Flügel (26) an einer Rippe (30) angelenkt ist, die an der Platte (23) in Querrichtung vorsteht.

5. Halteklammer nach einem der Ansprüche 1 bis 4, **dadurch gekennzeichnet, dass** die vom Scharnierbereich (28) am weitesten entfernte Flanke der Einstecknut (34) mindestens örtlich vorstehend einen Einhakwulst (37) aufweist.

6. Halteklammer nach einem der Ansprüche 1 bis 5, **dadurch gekennzeichnet, dass** die Einstecknut (34) des Flügels (26) sich längs seines freien Randes erstreckt.

7. Halteklammer nach einem der Ansprüche 1 bis 6, **dadurch gekennzeichnet, dass** die Einstecknut (34) des Flügels (26) zwischen zwei Wänden (35, 36) gebildet ist und dass die vom Scharnierbereich (28) am weitesten entfernte (35) dieser Wände (35, 36) eine kleinere Dicke als die andere Wand (36) hat.

8. Halteklammer nach einem der Ansprüche 1 bis 7, **dadurch gekennzeichnet, dass** der Flügel (26) eine bewegliche der Backen einer Zange (39) bildet, deren andere mit der Platte (23) fest verbundene Backe (40) feststehend ist.

9. Halteklammer nach Anspruch 8, **dadurch gekennzeichnet, dass** die feststehende Backe (40) mit der Platte (23) einstückig ausgeführt ist und von einer Verlängerung dieser Platte (23) gebildet ist.

10. Halteklammer nach einem der Ansprüche 8, 9, **dadurch gekennzeichnet, dass** zwischen der von dem Flügel (26) gebildeten beweglichen Backe und der feststehenden Backe (40) Einklinkmittel vorgesehen sind.

11. Halteklammer nach Anspruch 10, **dadurch gekennzeichnet, dass** die Einklinkmittel, die zwischen der von dem Flügel (26) gebildeten beweglichen Backe und der feststehenden Backe (40) vorgesehen sind, zwei Rippen (42) umfassen, die mit diesen beiden Backen fest verbunden sind und jeweils in Entsprechung miteinander einen Einhakwulst (43) aufweisen.

12. Halteklammer nach einem der Ansprüche 1 bis 11, **dadurch gekennzeichnet, dass** die Platte (23) an ihrem anderen Ende (44), Anschlagsende genannt, auf ihrer oberen Fläche eine Auflagefläche (46) aufweist, mit der sie unter die rechtwinklige Abwinklung (15) einer der Seitenwangen (13) der Kabelrinne (19) treten kann.

13. Halteklammer nach Anspruch 12, **dadurch gekennzeichnet, dass** die Auflagefläche (46) auf der Seite des Scharnierbereichs (28) durch eine Rippe (47) abgegrenzt ist, die auf der Platte (23) vorsteht und sich im wesentlichen parallel zu dem Scharnierbereich (28) erstreckt.

14. Halteklammer nach einem der Ansprüche 12, 13, **dadurch gekennzeichnet, daß** die Platte (23) auf der Seite ihres Anschlagsendes (44) mindestens ein abtrennbares Teilstück (48) aufweist, das eine Auflagefläche (46) besitzt.

15. Halteklammer nach Anspruch 14, **dadurch gekennzeichnet, dass** das abtrennbare Teilstück (48), das die Platte (23) aufweist, sich von einem Bereich (51) geringerer Dicke an erstreckt, der dafür ausgelegt ist, seine Entfernung zu erleichtern, und der vor diesem abtrennbaren Teilstück (48) eine weitere Auflagefläche (46) abgrenzt.

16. Halteklammer nach Anspruch 15, **dadurch gekennzeichnet, dass** der Bereich (51) geringerer Dicke, von dem aus sich ein abtrennbares Teilstück (48) der Platte (23) erstreckt, durch eine Nut (52) gebildet wird, die auf der inneren Fläche der Platte (23) vertieft in Querrichtung vorgesehen ist.

17. Halteklammer nach einem der Ansprüche 14 bis 16, **dadurch gekennzeichnet, dass** ihre Platte (23) nacheinander mehrere abtrennbare Teilstücke (48) aufweist.

18. Halteklammer nach Anspruch 17, **dadurch gekennzeichnet, dass** die Platte (23) bei dem ersten abtrennbaren Teilstück (48) auf ihrer oberen Fläche vorstehend längs ihres Querrands einen Haken (53) aufweist.

19. Halteklammer nach einem der Ansprüche 17, 18, **dadurch gekennzeichnet, dass** die Auflagefläche (46) sich bei jedem der anderen abtrennbaren Teilstücke (48) als dem ersten frei durchgehend bis zu dem Querrand der Platte (23) erstreckt, der sich aus der Entfernung des vorhergehenden abtrennbaren Teilstücks (48) ergibt.

20. Halteklammer nach einem der Ansprüche 1 bis 19, **dadurch gekennzeichnet, dass** der Flügel (26) sich über die ganze Breite der Platte (23) erstreckt.

21. Halteklammer nach einem der Ansprüche 1 bis 20, **dadurch gekennzeichnet, dass** sich alle auf der oberen Fläche der Platte (23) vorgesehenen vorstehenden Rippen (30, 47) über deren ganze Breite erstrecken.

22. Halteklammer nach einem der Ansprüche 1 bis 21, **dadurch gekennzeichnet, dass** die Platte (23) auf ihrer unteren Fläche längs jedes ihrer Längsränder vorstehend eine Verstärkungsrippe (29) aufweist.

23. Kabelrinne, die einerseits einen Mittelboden (11) und zwei Seitenwangen (13) aufweist, wobei auf der inneren Fläche jeder dieser Seitenwangen (13) vorstehend eine rechtwinklige Abwinklung (15) vorgesehen ist, die auf das Innere zu gerichtet ist und die zum Einstecken eines Deckels (16) in Längsrichtung eine Nut (18) besitzt, und der andererseits örtlich mindestens eine Halteklammer (22) zugeordnet ist, die sich in Querrichtung von der rechtwinkligen Abwinklung (15) der einen ihrer Seitenwangen (13) zur rechtwinkligen Abwinklung (15) der anderen erstreckt, **dadurch gekennzeichnet, dass** die Halteklammer (22) gemäß einem der Ansprüche 1 bis 22 ausgebildet ist und über ihren Flügel (26) mit der Nut (18) der rechtwinkligen Abwinklung (15) einer der Seitenwangen (13) in Eingriff steht, wobei sie in dieser Nut (18) in Querrichtung jeden für das Einstecken des Deckels (16) erforderlichen Raum frei lässt.

## Claims

1. A retaining clip for channels having lateral limbs each provided with an inwardly directed right-angled flange portion, the retaining clip being of the kind comprising an elongate plate (23) of which one end (24) at least, referred to herein as the fixing end, has fastening means (25) for fixing it to the right-angled flange portion (15) of one of the lateral limbs (13) of said channel (10), and **characterised in that** said fastening means (25) are carried by a flap (26) extending on the side of the upper surface of the plate (23) and pivoted to the latter by way of a hinge zone (28) capable of a pivotal movement at least equal to 90°, said fastening means (25) comprising an engagement groove (34) parallel to the hinge zone (28).

2. A retaining clip according to claim 1 **characterised in that** the hinge zone (28) is capable of a pivotal movement of close to 180°.

3. A retaining clip according to either one of claims 1 and 2 **characterised in that** the flap (26) carrying the fastening means (25) is in one piece with the plate (23), the hinge zone (28) which connects it to the latter being a zone of lesser thickness overall.

4. A retaining clip according to any one of claims 1 to 3 **characterised in that** the flap (26) carrying the fastening means (25) is pivoted to a rib (30) which projects transversely on the plate (23).

5. A retaining clip according to any one of claims 1 to 4 **characterised in that** the flank of the engagement groove (34), which is most remote from the hinge zone (28), has at least locally in projecting relationship a latching ridge (37).

6. A retaining clip according to any one of claims 1 to 5 **characterised in that** the engagement groove (34) of the flap (26) extends along the free edge thereof.

7. A retaining clip according to any one of claims 1 to 6 **characterised in that**, the engagement groove (34) of the flap (26) being formed between two walls (35, 36), the thickness of that one (35) of said walls (35, 36), which is most remote from the hinge zone (28), is less than the thickness of the other wall (36).

8. A retaining clip according to any one of claims 1 to 7 **characterised in that** the flap (26) forms one of the movable jaws of a pincer arrangement (39) of which the other jaw (40) which is fixed with respect to the plate (23) is a fixed jaw.

9. A retaining clip according to claim 8 **characterised in that**, in one piece with the plate (23), the fixed jaw (40) is formed by an extension portion of said plate (23).

10. A retaining clip according to either one of claims 8 and 9 **characterised in that** latching means are provided between the movable jaw formed by the flap (26) and the fixed jaw (40).

11. A retaining clip according to claim 10 **characterised in that** the latching means provided between the movable jaw formed by the flap (26) and the fixed jaw (40) comprise two ribs (42) which, each respectively fixed with respect to said two jaws, each comprise in mutually corresponding relationship a latching ridge (43).

12. A retaining clip according to any one of claims 1 to 11 **characterised in that**, at its other end (44), referred to as the abutment end, the plate (23) on its upper surface has a support face (46) by way of which it is capable of engaging under the right-angled flange portion (15) of one of the lateral limbs (13) of the channel (10).

13. A retaining clip according to claim 12 **characterised in that** the support face (46) is delimited at the side towards the hinge zone (28) by a rib (47) which, in projecting relationship on the plate (23), extends substantially parallel to said hinge zone (28).

14. A retaining clip according to either one of claims 12 and 13 **characterised in that**, at the side of its abutment end (44), the plate (23) comprises at least one cuttable portion (48) having a support face (46).

15. A retaining clip according to claim 14 **characterised in that** the cuttable portion (48) that the plate (23) comprises extends from a zone (51) of smaller thickness which is capable of facilitating removal thereof and which upstream of said cuttable portion (48) delimits another support face (46).

16. A retaining clip according to claim 15 **characterised in that** the zone (51) of smaller thickness from which a cuttable portion (48) of the plate (23) extends is formed by a groove (23) provided transversely in recessed relationship in said plate (23) on the lower surface thereof.

17. A retaining clip according to any one of claims 14 to 16 **characterised in that** its plate (23) successively comprises a plurality of cuttable portions (48).

18. A retaining clip according to claim 17 **characterised in that**, for the first cuttable portion (48), the plate (23) has a hook (53) in projecting relationship on its upper surface along its transverse edge.

19. A retaining clip according to either one of claims 17 and 18 **characterised in that**, for each of the cuttable portions (48) other than the first, the support face (46) extends freely continuously as far as the transverse edge of the plate (23) resulting from removal of the preceding cuttable portion (48).

20. A retaining clip according to any one of claims 1 to 19 **characterised in that** the flap (26) extends over the entire width of the plate (23).

21. A retaining clip according to any one of claims 1 to 20 **characterised in that** all the ribs (30, 47) present in projecting relationship on the upper surface of the plate (23) extend over the entire width thereof.

22. A retaining clip according to any one of claims 1 to 21 **characterised in that** the plate (23) has a reinforcing rib (29) in projecting relationship on its lower surface along each of its longitudinal edges.

23. A channel which on the one hand is of the type comprising a central base portion (11) and two lateral limbs (13) with, in projecting relationship on the inside surface of each of said lateral limbs (13), a right-angled flange portion (15) which is directed inwardly and which, for engagement of a cover (16), longitudinally comprises a groove (18) and with which on the other hand there is associated locally at least one retaining clip (22) which extends transversely from the right-angled flange portion (15) of one of its lateral limbs (13) to the right-angled flange portion (15) of the other of said lateral limbs, **characterised in that** the retaining clip (22) is in accordance with any one of claims 1 to 22, said retaining clip (22) being in engagement with the groove (18) of the right-angled flange portion (15) of one of the lateral limbs (13) by way of its flap (26) while leaving free transversely in said groove (18) all the space necessary for engagement of the cover (16).
